# EUROPÄISCHE PATENTSCHRIFT

(11) **EP 1 045 084 B1**
(45) Veröffentlichungstag und Bekanntmachung des Hinweises auf die Patenterteilung: **04.02.2004**
(21) Anmeldenummer: 00103853.8
(22) Anmeldetag: 24.02.2000
(51) Int. Cl.: E04F 15/10, B29C 70/64

(54) **Bahnförmiger Bodenbelag und Verfahren zu dessen Herstellung**
Sheet-like floor covering and method for its manufacture
Revêtement de sol sous forme de bande et son procédé de fabrication

(30) Priorität: 08.04.1999 DE 19915729
(43) Veröffentlichungstag der Anmeldung: 18.10.2000
(73) Patentinhaber: Carl Freudenberg KG, 69469 Weinheim (DE)
(72) Erfinder: Graab, Gerhard, Dr., 68199 Mannheim (DE); Rischer, Dieter, 69518 Abtsteinach (DE); Heckel, Klaus, Dr., 69517 Gorxheimertal (DE); Heidecke, Gerhard, 64625 Bensheim (DE)

(56) Entgegenhaltungen:
- FR-A- 853 876
- FR-A- 2 700 570
- US-A- 3 164 645
- US-A- 4 826 638
- US-A- 5 439 625
- US-A- 5 603 367

## Beschreibung

### Technisches Gebiet

Die vorliegende Erfindung betrifft einen bahnförmigen Bodenbelag aus vulkanisiertem Kautschuk enthaltend eine elastische Gummibahn, deren Oberseite eine Dekorfläche bildet, wobei in die Gummibahn erste Dekorteilchen zumindest teilweise derart eingebettet sind, daß die ersten Dekorteilchen von der Oberseite sichtbar sind.

### Stand der Technik

Ein solcher bahnförmiger Bodenbelag ist aus der DE 39 42 505 C1 bekannt. In der DE 39 42 505 C1 wird vorgeschlagen, als Dekorteilchen Partikel zu verwenden, welche aus Gummimahlgut bestehen. Dabei kann eine gute Haftung zwischen den Dekorteilchen und der Gummibahn erreicht werden. Wenn jedoch für die Dekorteilchen anstelle von Gummimahlgut ein anderes Material verwendet wird, zeigt sich in Reibversuchen, daß solche Dekorteilchen eine noch nicht zufriedenstellende Haftung in der Gummibahn erzielen und sich demzufolge bei Reibbeanspruchung lösen können.

Aus der FR 853 876 A sind verschleißfeste Oberflächen bekannt. Diese weisen ein elastisches Bindemittel, welches Kautschuk enthält, sowie granuliertes hartes Material für die Widerstandsfähigkeit auf. Das verschleißfeste Material kann aus Schmirgel, Karborund, Korund, Feuerstein, Bauxit und anderen harten Materialien bestehen, welche abrassive Eigenschaften aufweisen.

### Darstellung der Erfindung

Aufgabe der vorliegenden Erfindung ist daher, die Haftung der Dekorteilchen an der Gummibahn zu verbessern und dadurch das Ablösen von Dekorteilchen zu minimieren.

Diese Aufgabe wird erfindungsgemäß mit den Merkmalen von Anspruch 1 gelöst. Die Beschichtung, welche vollflächig oder abschnittsweise ausgeführt sein kann, führt dazu, daß für die Dekorteilchen nunmehr auch Materialien verwendet werden können, die ansonsten keinen haltbaren und reibfesten Verbund mit der Gummibahn eingehen. Die vorliegende Erfindung macht es aufgrund der Verwendung von Aluminiumfolie möglich, neue ästhetische Gestaltungen zu erzielen. Bei der Verwendung von Epoxidharz ist die Verarbeitung problemlos, zudem wird eine gute und dauerhafte Haftung der Dekorteilchen erzielt.

Gemäß einer Weiterbildung der Erfindung ist vorgesehen, daß die ersten Dekorteilchen wenigstens teilweise aus einem Material mit stark lichtreflektierender Wirkung bestehen. Gerade solche Partikel, welche einen glitzemden bzw. metallisch oder metallähnlich reflektierenden Effekt aufweisen, können aufgrund der vorliegenden Erfindung erstmals für einen Bodenbelag aus Gummi verwendet werden, da sie erst aufgrund der Beschichtung einen guten Verbund mit der Gummioberfläche eingehen.

Eine gute Haftung wird insbesondere dadurch erzielt, daß die beschichteten ersten Dekorteilchen Partikel Aluminium sind. Beschichtete Aluminiumpartikel können insbesondere als Aluminiumflitter verwendet werden, welches durch Zerkleinern einer mit Epoxidharz beschichteten Alufolie hergestellt werden kann. Der Vorteil von Aluminium ist, daß es relativ weich ist und ein einfaches Zuschneiden des Bodenbelags ermöglicht.

Eine weitere Verbesserung der Haftung kann dadurch erreicht werden, daß die ersten Dekorteilchen unregelmäßig geformt sind. Andererseits können gemäß der vorliegenden Erfindung auch regelmäßig geformte Dekorteilchen, zum Beispiel mit quadratischer, rechteckiger oder runder Grundfläche dauerhaft an der Gummioberfläche festgelegt werden.

Zur Erzielung einer weitgehend ebenen Oberfläche ist von Vorteil, wenn die Dicke von zumindest einem Teil der ersten Dekorteilchen geringer ist als deren Längs- und Quererstreckung ist.

Erfindungsgemäß ist weiterhin vorgesehen, daß die Größe der ersten Dekorteilchen zwischen 0,05 und 5 mm liegt, vorzugsweise zwischen 0,25 mm und 0,70 mm. Die Größe der Dekorteilchen kann mikroskopisch oder auch durch Siebanalyse bestimmt werden.

Darüber hinaus können erfindungsgemäß zweite Dekorteilchen aus Gummi ohne Beschichtung vorgesehen sein.

Die vorliegende Erfindung betrifft darüberhinaus ein Verfahren zur Herstellung eines bahnförmigen Bodenbelages mit folgenden Schritten:
Bereitstellen von Dekorteilchen, welche mit einer Beschichtung insbesondere aus Epoxidharz vorab wenigstens teilweise versehen sind, Bereitstellen einer ungehärteten eine Oberseite aufweisende Gummibahn, Aufbringen der Dekorteilchen auf die Oberseite, insbesondere durch Aufstreuen, Verbinden der Dekorteilchen mit der Gummibahn-mittels Druck und Vulkanisieren der Gummibahn mit den Dekorteilchen.

Weiterhin ist erfindungsgemäß. vorgesehen, daß die Beschichtung, insbesondere das Epoxidharz auf die ersten Dekorteilchen aufgebracht und ausgehärtet ist, bevor diese auf die Oberseite einer ungehärteten Gummibahn aufgebracht werden und die Gummibahn vulkanisiert wird.

### Kurzbeschreibung der Zeichnung

Ein Ausführungsbeispiel der Erfindung ist in der Zeichnung dargestellt. Es zeigen:
- Figur 1: eine Draufsicht auf einen erfindungsgemäßen Bodenbelag und
- Figur 2: einen Querschnitt durch einen erfindungsgemäßen Bodenbelag.

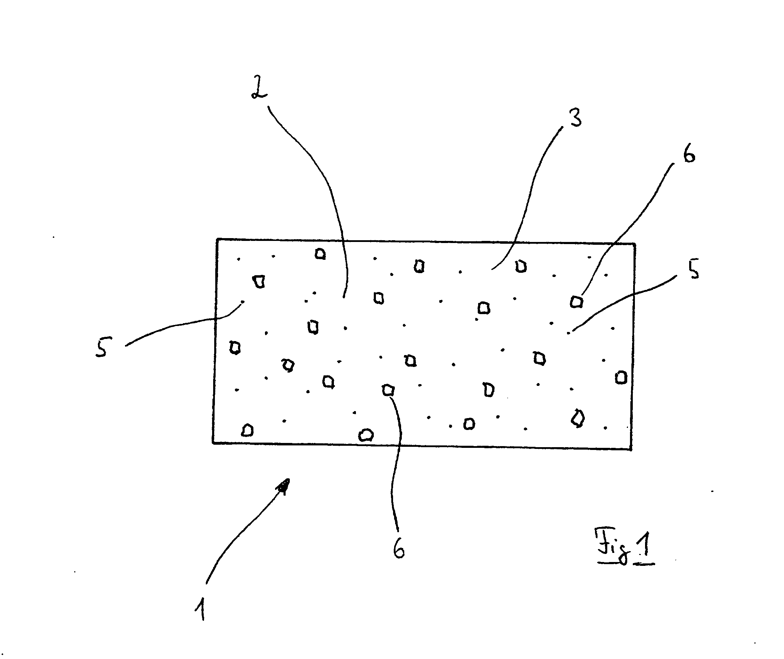

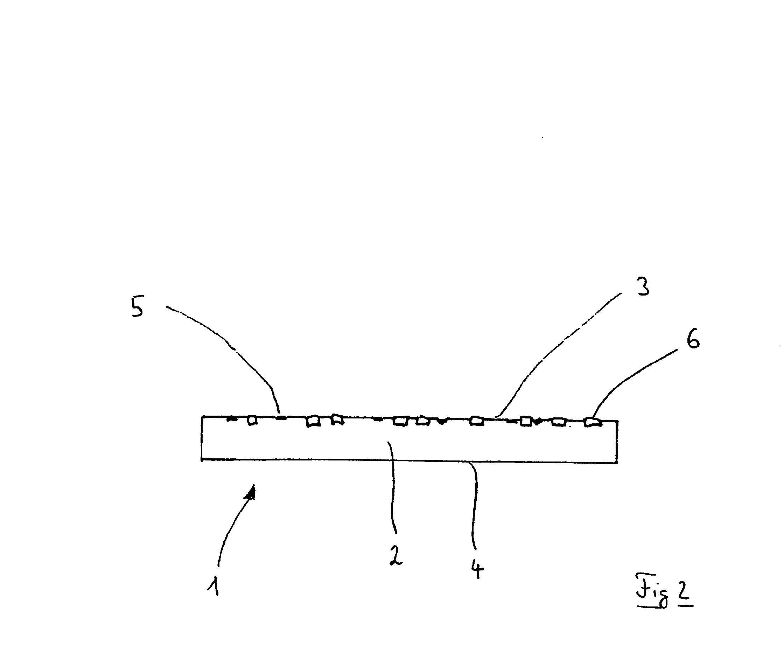

In den Figuren 1 und 2 ist schematisch ein bahnförmiger Bodenbelag 1 dargestellt, welcher im wesentlichen aus einer Gummibahn 2 gebildet wird, deren Oberseite 3 eine Dekorfläche bildet. Mit der Rückseite 4 kann der Bodenbelag 1 auf die zu belegende Bodenfläche aufgelegt und beispielsweise durch Kleben mit dieser dauerhaft verbunden werden.

In die Gummibahn 2 sind erste und zweite Dekorteilchen 5, 6 derart eingebettet, daß die Dekorteilchen 5,6 von der Oberseite 3 her sichtbar sind. Dabei sind erste und zweite Dekorteilchen 5, 6 derart an der Oberfläche der Gummibahn angeordnet, daß sie einen Teil der Oberfläche des Bodenbelages 1 bilden.

Die ersten Dekorteilchen 5 bestehen aus einem Material mit stark lichtreflektierender Wirkung, zum Beispiel aus Korund, Siliciumcarbid, Aluminium oder einer Mischung von verschiedenen Materialien. Die ersten Dekorteilchen 5 mit stark lichtreflektierender Wirkung geben dem Bodenbelag 1 unter verschiedenen Betrachtungswinkeln einen variablen Glitzereffekt. Die Dekorteilchen 5 sind mit einer Beschichtung aus Epoxidharz versehen. Die Beschichtung ist transparent, insbesondere durchsichtig und kann eingefärbt sein und damit auch farbige Effekte ermöglichen. Im Falle der Verwendung von ersten Dekorteilchen 5 aus Aluminium können diese besonders einfach dadurch hergestellt werden, daß eine Aluminiumfolie zunächst mit Epoxidharz beschichtet und anschließend zerkleinert wird. Das Epoxidharz kann aber auch durch eine andere Technik, beispielsweise durch Sprühen oder Tauchen auf die ersten Dekorteilchen 5 aufgebracht werden. Die ersten Dekorteilchen 5 bestehen aus einem Material, welches kein Gummi und somit von dem Material der Gummibahn 2 verschieden ist.

Die ersten Dekorteilchen 5 können regelmäßig, zum Beispiel mit quadratischer, rechteckiger, kreisrunder Grundfläche oder unregelmäßig geformt sein. Die Dicke der ersten Dekorteilchen 5 ist geringer als die Längs- und Quererstreckung. Die Größe der ersten Dekorteilchen 5 liegt zwischen 0,05 mm und 5 mm, vorzugsweise zwischen 0,25 mm und 0,70 mm. Die zweiten Dekorteilchen 6 bestehen aus Gummi. Da solche zweiten Dekorteilchen 6 auch ohne Epoxidharzbeschichtung einen guten Verbund mit der Gummibahn 2 eingehen, ist eine Epoxidharzbeschichtung der zweiten Dekorteilchen 6 nicht erforderlich. Die durch Siebanalyse bestimmte Größe der zweiten Dekorteilchen 6 liegt zwischen 0,3 mm und 1,5 mm, vorzugsweise zwischen 0,5 mm und 1,0 mm.

Die Gummimischung für die Gummibahn 2 und/oder die zweiten Dekorteilchen 6 können aus einer bekannten Gummimischung gefertigt sein. Nachfolgend wird ein Beispiel für eine solche Gummimischung angegeben:

| | | |
|---|---|---|
| Styrol-Butadien-Kautschuk mit 23% Styrolgehalt | 100 | Teile |
| Styrol-Butadien-Copolymer mit 85% Styrolgehalt | 20 | Teile |
| Gefällte Kieselsäure | 40 | Teile |
| Kaolin | 70 | Teile |
| Gefällte Kreide | 30 | Teile |
| Cumaron-Inden-Harz | 15 | Teile |
| Zinkoxid | 5 | Teile |
| Stearinsäure | 1,5 | Teile |
| Schwefel | 2,5 | Teile |
| Polyethylenglykol | 3,0 | Teile |
| Cyclohexylbenzthiazylsulfenamid | 2,7 | Teile |
| Tetramethylthiuramindsulfid | 0,5 | Teile |

Die zweiten Dekorteilchen 6 können durch Zerkleinern von einer vulkanisierten insbesondere bahnförmigen Gummimasse erzeugt werden. Sie können aber auch aus noch unvulkanisierten Gummipartikeln bestehen, die entweder einfarbig oder mehrfarbig sein können.

Die Herstellung des erfindungsgemäßen Bodenbelages erfolgt durch folgende Verfahrensschritte. Zunächst werden erste Dekorteilchen 5, welche mit einem Epoxidharz wie oben angegeben vorab wenigstens teilweise beschichtet sind, bereitgestellt. Bereitgestellt wird darüberhinaus eine ungehärtete, kalandrierte Gummibahn 2. Auf deren Oberseite werden die ersten Dekorteilchen 5 und gegebenenfalls zweite Dekorteilchen 6 aufgebracht. Dies kann durch Aufstreuen der Dekorteilchen geschehen. Darauf werden die Dekorteilchen 5, 6 mit der Gummibahn 2 mittels Druck verbunden, indem die Dekorteilchen z.B. mittels eines beheizten Stahlzylinders in die Gummibahn 2 hineingedrückt werden, bis sie zumindest teilweise in diese eingebettet sind. Schließlich wird die Gummibahn 2 mit den Dekorteilchen 5, 6 vulkanisiert, wodurch die Dekorteilchen 5, 6 dauerhaft an der Oberfläche der Gummibahn 2 fixiert werden. Alternativ ist es möglich, die Dekorteilchen 5, 6 in die Gummibahnen 2 vor dem Kalandrieren einzumischen, so daß sie nicht nur an deren Oberseite angeordnet, sondern über den ganzen Querschnitt verteilt sind. Hierdurch wird erreicht, daß sich auch bei einem Verschleiß der oberen Schicht des Bodenbelages dessen Aussehen nicht ändert.

Die Prüfung der Haftung der Dekorteilchen 5,6 kann dadurch erfolgen, daß zwei jeweils 10 x 10 cm große Belagstücke mit ihren Dekorseiten 3 aneinander gerieben werden. Dabei dürfen sich nur sehr wenige bis gar keine Dekorteilchen von der Gummibahn 2 lösen. Die erfindungsgemäßen Bodenbeläge zeigen hierbei hervorragende Werte, so daß sie auch für stark beanspruchte Böden z.B. in öffentlichen Gebäuden verwendet werden können.

## Patentansprüche

1. Bahnförmiger Bodenbelag (1) aus vulkanisiertem Kautschuk enthaltend eine elastische Gummibahn (2), deren Oberseite (3) eine Dekorfläche bildet, wobei in die Gummibahn (2) erste Dekorteilchen (5) zumindest teilweise derart eingebettet sind, daß die ersten Dekorteilchen (5) von der Oberseite (3) her sichtbar sind, **dadurch gekennzeichnet, daß** die ersten Dekorteilchen aus zerkleinerter Aluminiumfolie bestehen und in wenigstens einem Teil der Kontaktfläche zwischen Gummibahn (2) und Dekorteilchen (5) mit einer transparenten Beschichtung aus Epoxidharz versehen sind.

2. Bodenbelag nach Anspruch 1, **dadurch gekennzeichnet, daß** die ersten Dekorteilchen (5) wenigstens teilweise aus einem Material mit stark lichtreflektierender Wirkung bestehen.

3. Bodenbelag nach einem der Anspruche 1 oder 2, **dadurch gekennzeichnet, daß** die ersten Dekorteilchen (5) unregelmäßig geformt sind.

4. Bodenbelag nach einem der Ansprüche 1 bis 3, **dadurch gekennzeichnet, daß** die Dicke von zumindest einem Teil der ersten Dekorteilchen (5) geringer ist als deren Längs- und Quererstreckung.

5. Bodenbelag nach einem der Ansprüche 1 bis 4, **dadurch gekennzeichnet, daß** die Größe der ersten Dekorteilchen zwischen 0.05 mm und 5 mm liegt, vorzugsweise zwischen 0,25 mm und 0,70 mm liegt.

6. Bodenbelag nach einem der Ansprüche 1 bis 5, **dadurch gekennzeichnet, daß** zweite Dekorteilchen (6) aus Gummi ohne Beschichtung vorgesehen sind.

7. Verfahren zur Herstellung eines bahnförmigen Bodenbelages nach einem der Ansprüche 1 bis 6 mit folgenden Schritten:
Bereitstellen von ersten Dekorteilchen (5), welche aus zerkleinerter Aluminiumfolie bestehen und vorab mit einer transparenten Beschichtung aus Epoxidharz wenigstens teilweise versehen sind,
Bereitstellen einer ungehärteten eine Oberseite (3) aufweisenden Gummibahn (2),
Aufbringen der wenigstens teilweise beschichteten ersten Dekorteilchen (5) auf die Oberseite (3),
Verbinden der Dekorteilchen (5) mit der Gummibahn (2) mittels Druck,
Vulkanisieren der Gummibahn (2) mit den Dekorteilchen(5).

8. Verfahren nach Anspruch 7, **dadurch gekennzeichnet, daß** die Beschichtung aus Epoxidharz auf die ersten Dekorteilchen (5) aufgebracht und ausgehärtet ist, bevor diese auf die Oberseite (3) einer ungehärteten Gummibahn (2) aufgebracht werden und die Gummibahn (2) vulkanisiert wird.

9. Verfahren nach Anspruch 7 oder 8, **dadurch gekennzeichnet dass** zusätzlich zu den ersten Dekorteilchen zweite Dekorteilchen aus Gummi auf die Oberseite der Gummibahn aufgebracht werden, bevor die ersten und zweiten Dekorteilchen mit der Gummibahn mittels Druck verbunden und die Gummibahn vulkanisiert wird.

## Claims

1. A sheet-like floor covering (1) of vulcanized rubber, comprising a flexible rubber sheet (2), the upper side (3) of which forms a decorative surface, with first decorative particles (5) being at least partially embedded in the rubber sheet (2) in such a way that the first decorative particles (5) are visible from the upper side (3), **characterized in that** the first decorative particles comprise comminuted aluminium foil and are provided in at least part of the contact area between the rubber sheet (2) and the decorative particles (5) with a transparent coating of epoxy resin.

2. A floor covering according to claim 1, **characterized in that** the first decorative particles (5) consist at least partly of a material with a strongly light-reflecting effect.

3. A floor covering according to either one of claims 1 and 2, **characterized in that** the first decorative particles (5) are irregularly formed.

4. A floor covering according to any one of claims 1 to 3, **characterized in that** the thickness of at least some of the first decorative particles (5) is less than their longitudinal and transverse extent.

5. A floor covering according to any one of claims 1 to 4, **characterized in that** the size of the first decorative particles lies between 0.05 mm and 5 mm, preferably between 0.25 mm and 0.70 mm.

6. A floor covering according to any one of claims 1 to 5, **characterized in that** second decorative particles (6) of rubber without a coating are provided.

7. A method for the manufacture of a sheet-like floor covering according to any one of claims 1 to 6, with the following steps:
provision of first decorative particles (5), which comprise comminuted aluminium foil and are previously provided at least partly with a transparent coating of epoxy resin,
provision of an uncured rubber sheet (2), having an upper side (3),
application of the at least partially coated first decorative particles (5) to the upper side (3),
bonding of the decorative particles (5) to the rubber sheet (2) by means of pressure,
vulcanizing of the rubber sheet (2) with the decorative particles (5).

8. A method according to claim 7, **characterized in that** the coating of epoxy resin is applied to the first decorative particles (5) and cured before the latter are applied to the upper side of (3) of an uncured rubber sheet (2) and the rubber sheet (2) is vulcanized.

9. A method according to claim 7 or 8, **characterized in that**, in addition to the first decorative particles, second decorative particles of rubber are applied to the upper side of the rubber sheet before the first and second decorative particles are bonded to the rubber sheet by means of pressure and the rubber sheet is vulcanized.

## Revendications

1. Revêtement de sol (1) sous forme de bande à base de caoutchouc vulcanisé contenant une bande de caoutchouc (2) élastique, dont le côté supérieur (3) forme une surface décorative, des premières parcelles décoratives (5) étant insérées au moins partiellement dans la bande en caoutchouc (2) de telle sorte que les premières parcelles décoratives (5) sont visibles par le côté supérieur (3), **caractérisé en ce que** les premières parcelles décoratives sont à base de feuille d'aluminium broyée et sont pourvues d'un revêtement transparent en résine époxy dans au moins une partie de la surface de contact entre la bande de caoutchouc (2) et les parcelles décoratives (5).

2. Revêtement de sol selon la revendication 1, **caractérisé en ce que** les premières parcelles décoratives (5) sont au moins partiellement à base d'un matériau présentant un effet très réfléchissant à la lumière.

3. Revêtement de sol selon l'une quelconque des revendications 1 ou 2, **caractérisé en ce que** les premières parcelles décoratives (5) sont formées de façon irrégulière.

4. Revêtement de sol selon l'une quelconque des revendications 1 à 3, **caractérisé en ce que** l'épaisseur d'au moins une partie des premières parcelles décoratives (5) est inférieure à leur extension longitudinale et leur extension transversale.

5. Revêtement de sol selon l'une quelconque des revendications 1 à 4, **caractérisé en ce que** la grandeur des premières parcelles décoratives se situe entre 0,05 mm et 5 mm, de préférence entre 0,25 mm et 0,70 mm.

6. Revêtement de sol selon l'une quelconque des revendications 1 à 5, **caractérisé en ce que** des secondes parcelles décoratives (6) en caoutchouc sont prévues sans revêtement.

7. Procédé pour la fabrication d'un revêtement de sol en forme de bande selon l'une quelconque des revendications 1 à 6, comportant les étapes suivantes :
mise à disposition de premières parcelles décoratives (5), qui sont à base de feuille d'aluminium broyée et sont pourvues au moins partiellement auparavant d'un revêtement transparent en résine époxy,
mise à disposition d'une bande de caoutchouc (2) non durcie et présentant un côté supérieur (3),
application des premières parcelles décoratives (5) revêtues au moins partiellement sur le côté supérieur (3),
raccord des parcelles décoratives (5) avec la bande de caoutchouc (2) par pression,
vulcanisation de la bande de caoutchouc (2) avec les parcelles décoratives (5).

8. Procédé selon la revendication 7, **caractérisé en ce que** le revêtement en résine époxy est appliqué sur les premières parcelles décoratives (5) et durci avant que ces parcelles soient appliquées sur le côté supérieur (3) d'une bande de caoutchouc (2) non durcie et que la bande de caoutchouc (2) soit vulcanisée.

9. Procédé selon la revendication 7 ou 8, **caractérisé en ce que**, en supplément des premières parcelles décoratives, des secondes parcelles décoratives en caoutchouc sont appliquées sur le côté supérieur de la bande de caoutchouc avant que les premières et secondes parcelles décoratives soient reliées à la bande de caoutchouc par pression et que la bande de caoutchouc soit vulcanisée.
